# EUROPÄISCHE PATENTSCHRIFT

(11) **EP 0 941 550 B1**
(45) Veröffentlichungstag und Bekanntmachung des Hinweises auf die Patenterteilung: **10.01.2001**
(21) Anmeldenummer: 97912092.0
(22) Anmeldetag: 01.10.1997
(51) Int. Cl.: H01H 47/32

(54) **ELEKTROMAGNET FÜR MAGNETVENTIL**
ELECTROMAGNET FOR AN ELECTROVALVE
ELECTRO-AIMANT POUR ELECTROVANNE

(30) Priorität: 26.11.1996 DE 19648899
(43) Veröffentlichungstag der Anmeldung: 15.09.1999
(73) Patentinhaber: HYDAC Electronic GmbH, 66128 Saarbrücken (DE)
(72) Erfinder: MORSCH, Joachim, D-66646 Marpingen (DE)
(74) Vertreter: Patentanwälte Bartels und Partner
(86) Internationale Anmeldenummer: EP9705411
(87) Internationale Veröffentlichungsnummer: WO9824105

(56) Entgegenhaltungen:
- DE-A- 3 102 656
- DE-U- 29 503 146
- US-A- 4 630 165

## Beschreibung

Die Erfindung betrifft einen Elektromagneten für ein Magnetventil mit den Merkmalen des Oberbegriffs des Anspruches 1.

Magnetventile werden dadurch betätigt, daß ein Anker in eine Spule eines Elektromagneten eingezogen wird. In einigen Ländern, insbesondere in den USA, werden hierfür vielfach AC-Magnete eingesetzt, die direkt mit einer Wechselspannung versorgt werden. In Europa dagegen ist es üblicher, DC-Magnete zu verwenden, die mit 24 V Gleichstrom betrieben werden. Sofern für die letztgenannten Magnete nur eine Wechselspannung zur Verfügung steht, finden dann Elektromagneten der eingangs genannten Art Verwendung, wie sie beispielsweise in der DE 25 11 564 A1 offenbart sind.

Ein solcher Elektromagnet könnte zwar grundsätzlich auch in einem Magnetventil eingesetzt werden, das für einen AC-Magneten ausgelegt ist, wie auch umgekehrt ein AC-Magnet in ein Magnetventil eingesetzt werden könnte, welches für einen Elektromagneten der eingangs genannten Art ausgelegt ist. Jedoch führt ein solcher Austausch jeweils zu einer Änderung der Schalteigenschaften des Magnetventils.

Der Elektromagnet muß bei gleichstromerregten Magnetspulen zur Optimierung der Schalteigenschaften des Magnetventils auch eine Entregung der Magnetspulen bereitstellen. Aus der DE 33 05 674 A1 ist eine derartige Schaltungsanordnung zur Entregung von gleichstromerregten Magnetspulen bekannt. Dabei ist der Magnetspule ein Entregungspfad zugeschaltet. Erregungsabhängig wird dabei ein elektronischer Schalter, der mit der Magnetspule in Reihe liegt, geschaltet.

Ausgehend von der zuletzt genannten Druckschrift liegt der Erfindung daher die Aufgabe zugrunde, einen Elektromagneten bereitzustellen, der bei einem Einsatz in Magnetventilen, die für unterschiedliche Magneten ausgelegt sind, zu einem optimierten Schaltverhalten führt. Insbesondere soll die Einschaltgeschwindigkeit und die Ausschaltgeschwindigkeit des Magnetventils durch die erfindungsgemäße Schaltungsanordnung optimiert werden und der Energieverbrauch des Elektromagneten im Betrieb reduziert werden.

Diese Aufgabe wird erfindungsgemäß gelöst durch einen Elektromagneten mit den Merkmalen des Anspruches 1. Vorteilhafte Ausgestaltungen sind Gegenstand der Unteransprüche. Ein Magnetventil mit einem erfindungsgemäßen Elektromagneten ist Gegenstand des Anspruches 7.

Durch den Varistor wird der erfindungsgemäße Elektromagnet vor Spannungsspitzen geschützt, wie sie insbesondere beim Anschluß des Elektromagneten an eine Wechselspannungsquelle oder bei den Abschaltvorgängen an der Spule auftreten können. Der Varistor hat dabei den Vorteil, daß er den für seine Schutzfunktion nötigen geringen Widerstand nur bei diesen Spannungsspitzen aufweist, während er bei normalen Spannungen einen höheren Widerstand und damit eine geringere Verlustleistung gegenüber einem Ohmschen Widerstand mit gleicher Schutzfunktion aufweist.

Die Steuerelektrode des Schalters ist gleichzeitig mit einem Timer und einem Oszillator verbunden. Der Timer schaltet beim Übergang des Elektromagneten in den Haltezustand den Schalter voll durch, und sorgt somit für den maximal möglichen Anstieg des Spulenstroms. Mit dem parallel zum Timer geschalteten Oszillator, der beim Erreichen des Haltezustandes die Steuerung des Schalters übernimmt, kann zur Energieeinsparung der Spulenstrom von dem zum Anziehen des Ankers des Elektromagneten notwendigen Wert auf den zum Halten des Ankers notwendigen Wert abgesenkt werden.

Die Übergangszeit vom Haltezustand des Elektromagneten in seinen Lösezustand, die bei einer Verwendung in einem Magnetventil dann die eine der beiden Schaltzeiten bestimmt, hängt davon ab, wie schnell der Spulenstrom gelöscht werden kann. Mit dem vorteilhafterweise vorgesehenen Schalter können Spule und Varistor in Serie gelegt werden, so daß die Löschung des Spulenstromes über den Varistor erfolgt. Gegenüber einer ausschließlichen Löschung über Dioden, z. B. den Gleichrichter, hat dies den Vorteil, daß am Varistor mehr Spannung abfällt, die Energie des Spulenmagnetfeldes also schneller in Wärme umgesetzt werden kann. Damit bewirkt der Varistor eine Schnellöschung der Spule. Gegenüber einem Ohmschen Widerstand hat der Varistor den Vorteil, daß er nur bei den durch das zusammenbrechende Magnetfeld induzierten Stromstärken den - vorteilhafterweise im Hinblick auf die Löschzeit optimierten - Widerstandswert aufweisen muß, ansonsten aber einen höheren Widerstand und damit eine geringere Verlustleistung aufweist.

Der Varistor und die Spule können unterschiedlich zueinander verschaltet sein. Entsprechend erstreckt sich die Schutzfunktion des Varistors auf unterschiedliche Bauteile des erfindungsgemäßen Elektromagneten. Bei einer Parallelschaltung des Varistors zur Spule ist diese vor den genannten Spannungsspitzen des Netzes geschützt, während bei einer Parallelschaltung zum Schalter dieser geschützt wird, was bei einem elektronischen Schalter wichtig ist.

Als Schalter findet vorteilhafterweise ein Feldeffekt-Transistor Anwendung. Eine kostengünstige Lösung ergibt sich durch den Anschluß des Gates an einen aus einem Ohmschen Widerstand und einem Kondensator bestehenden Spannungsteiler, der zugleich auch kurzzeitige Spannungsänderungen ausgleicht.

Der Einsatz der erfindungsgemäßen Schaltungsanordnung für den Betrieb eines Elektromagneten in einem Magnetventil führt, unabhängig ob der Elektromagnet an eine Gleichspannungs- oder an eine Wechselspannungsquelle angeschlossen wird, zu vergleichbaren Schaltzeiten. Das bei AC-Magneten auftretende Problem, daß bei blockiertem Anker die Spule überlastet wird und durchbrennt, tritt bei dem Einsatz eines erfindungsgemäßen Elektromagneten nicht auf. Durch den Verzicht auf AC-Magnete werden auch die durch Abstrahlung von elektromagnetischen Feldern bedingten Störungen und Verluste weitgehend vermieden.
Für die Produktion ergibt sich der Vorteil, daß die Zahl der Fertigungslinien reduziert werden kann. Ferner müssen nicht die für AC-Magneten notwendigen hysteresearmen Materialien für die im Spulenfeld befindlichen Bauteile verwendet werden. Beides führt zu einer Kostenreduktion.

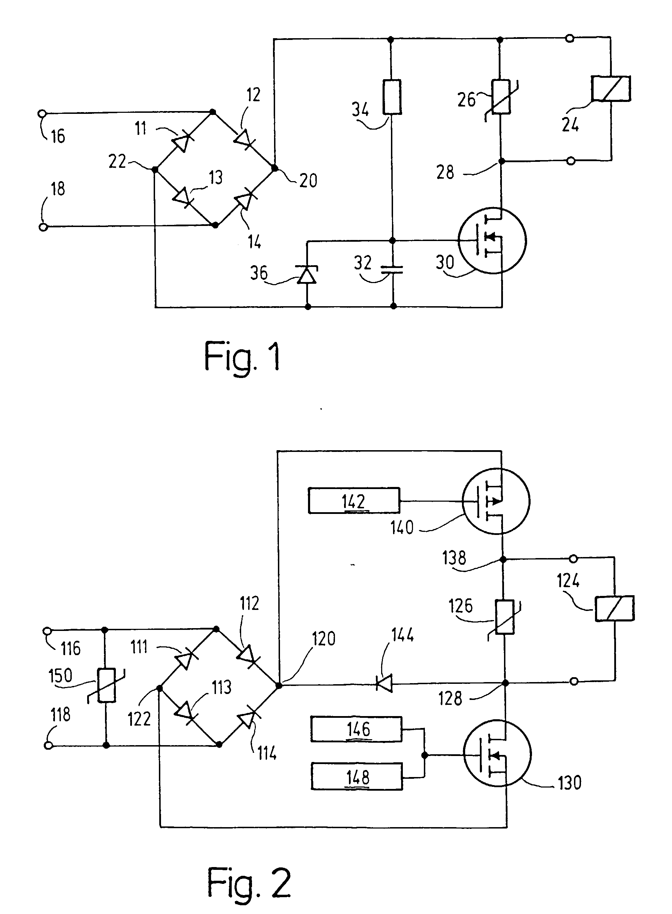

Im folgenden ist die Erfindung anhand dreier in der Zeichnung dargestellten Ausführungsbeispielen näher erläutert. Es zeigen
- Fig. 1: ein Blockschaltbild des ersten Ausführungsbeispiels,
- Fig. 2: ein Blockschaltbild des zweiten Ausführungsbeispiels,

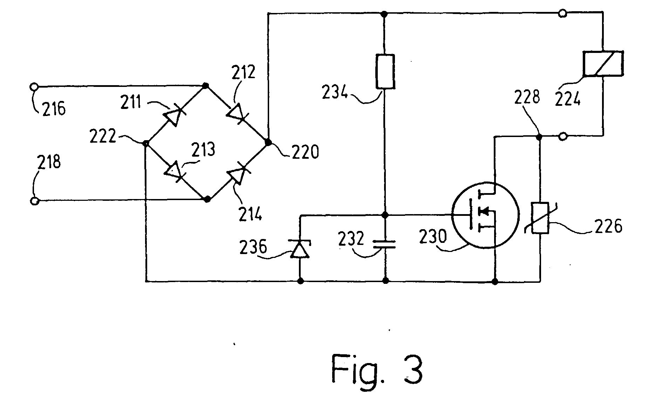

- Fig. 3: ein Blockschaltbild des dritten Ausführungsbeispiels.

Das erste Ausführungsbeispiel betrifft einen auf kostengünstige Weise realisierten Elektromagneten mit Schutzmaßnahmen für die Spule und kurzen Abschaltzeiten. Vier Dioden 11, 12, 13, 14 sind in an sich bekannter Weise zu einem Brückengleichrichter zusammengeschaltet. Jeder der zwei Eingänge des Brükkengleichrichters ist mit je einem Anschluß 16 bzw. 18 für eine Spannungsquelle verbunden. Der Gleichrichter 11, 12, 13, 14 weist zwei Gleichspannungsausgänge auf, nämlich den Pluspol 20 und den Minuspol 22. Mit dem Pluspol 20 ist das eine Ende einer Magnetspule 24 verbunden, welche den eigentlichen Elektromagneten bildet. Ebenfalls mit dem Pluspol 20 verbunden ist das eine Ende eines Varistors 26. Das andere Ende der Spule 24 und des Varistors 26 liegen durch eine Verbindung auf gleichem Potential, so daß die Spule und der Varistor 26 also parallel zueinander geschaltet sind.

Mit dem in der Zeichnung mit 28 bezeichneten Punkt der letztgenannten gemeinsamen Verbindung ist die Drain eines selbstsperrenden n-Kanal-Feldeffekt-Transistors (FET) 30 verbunden. Die Source des FET 30 ist mit dem Minuspol 22 des Gleichrichters verbunden. Das Gate des FET 30 ist in Abwandlung der erfindungsgemäßen Ansteuerung der Steuerelektrode über einen Kondensator 32 mit dem Minuspol 22 und über einen Widerstand 34 mit dem Pluspol 20 verbunden. Parallel zum Kondensator 32 ist noch eine Zenerdiode 36 in Sperrichtung geschaltet, die den FET 30 vor zu hohen Spannungen zwischen Gate und Source schützt. Zwischen den Anschlüssen 16 und 18 kann ein weiterer Varistor vorgesehen sein zum Schutz der Bauteile des Elektromagneten, insbesondere des FET 30, vor Spannungsspitzen des Netzes.

Solange an den Anschlüssen 16 und 18 keine Spannungsquelle angeschlossen ist, befindet sich der Elektromagnet im Lösezustand. Im Falle einer Verwendung in einem Magnetventil ist der Anker nicht in die Spule 24 eingezogen.

Wird der Elektromagnet dadurch eingeschaltet, daß die Anschlüsse 16 und 18 mit einer Gleichspannungsquelle verbunden werden, so liegt im ersten Augenblick keine Spannung am Kondensator 32 und damit zwischen Gate und Source des FET 30 an. Sobald aber der Kondensator 32 ausreichend aufgeladen ist, schaltet der FET 30 durch. Dann beginnt sich ein Strom durch die Spule 24 aufzubauen, die dann den Anker anzieht.

Wird der Elektromagnet abgeschaltet durch Trennen der Anschlüsse 16 und 18 von der Spannungsquelle, bleibt der FET 30 so lange durchgeschaltet, bis die Ladung des Kondensators 32 und damit die Spannung zwischen Gate und Source unter den Schwellwert zum Durchschalten abgesunken ist. Während dieser Zeit fließt der in der Spule 24 induzierte Strom im wesentlichen über den Gleichrichter, vorliegend also über die Dioden 11 und 12 und parallel dazu über die Dioden 13 und 14. Sobald der FET 30 nicht mehr durchgeschaltet ist, fließt der in Rede stehende Strom über den Varistor 26. Soweit die Kenndaten des Varistors 26, insbesondere die Abhängigkeit seines Widerstands vom durchfließenden Strom, auf die Spule 24 abgestimmt sind, wird der Strom durch die Spule 24 optimal schnell gelöscht.

Wird der Elektromagnet dadurch eingeschaltet, daß die Anschlüsse 16 und 18 mit einer Wechselspannungsquelle verbunden werden, verläuft der Übergang in den Haltezustand des Elektromagneten wie im Falle des Anschlusses an eine Gleichspannungsquelle. Der Kondensator 32 hat zusätzlich die Funktion, während der Nullstellen der zwischen Pluspol 20 und Minuspol 22 abgegriffenen, pulsierenden Gleichspannung die Spannung zwischen Gate und Source des FET 30 oberhalb des Schwellwertes zum Durchschalten zu halten.

Das zweite Ausführungsbeispiel zum erfindungsgemäßen Elektromagneten weist außer einem Überspannungsschutz und kurzen Schaltzeiten noch günstige Haltestromleistungen auf. Die mit dem ersten Ausführungsbeispiel übereinstimmenden Teile sind mit um 100 höheren Bezugszeichen gekennzeichnet. Genau wie im ersten Ausführungsbeispiel ist ein Brückengleichrichter mit vier Dioden 111, 112, 113, 114 vorgesehen, der zwei Anschlüsse 116 und 118 aufweist, und an dessen Minuspol 122 die Source eines FET 130 angeschlossen ist. Eine Spule 124 und ein Varistor 126 sind über einen gemeinsamen Potentialpunkt 128 mit der Drain des FET 130 verbunden.

Das andere Ende der Spule 124 und des Varistors 126 sind im Unterschied zum ersten Ausführungsbeispiel nicht mit dem Pluspol verbunden, sondern über einen weiteren gemeinsamen Potentialpunkt 138 mit der Drain eines selbstsperrenden p-Kanal Feldeffekt-Transistors 140 verbunden. Die Source dieses weiteren FET 140 ist mit dem Pluspol 120 verbunden. Am Gate des weiteren FET 140 ist eine Netzerkennungsvorrichtung 142 angeschlossen. Zwischen dem Pluspol 120 und dem Potentialpunkt 128, also parallel zur Spule 124, dem Varistors 126 und dem weiteren FET 140, ist eine Freilaufdiode 144 in Sperrichtung angeschlossen.

Am Gate des FET 130 ist ein Timer 146 und parallel dazu ein Oszillator 148 angeschlossen. Der Oszillator 148 besitzt eine variable duty cycle und wird vorzugsweise mit einer deutlich höheren Frequenz (z.B. 500 bis 2000 Hz) als die Netzfrequenz betrieben.

Zwischen den Anschlüssen 116 und 118 ist noch ein weiterer Varistor 150 geschaltet. Dieser weitere Varistor 150 schützt den Elektromagneten vor Spannungsspitzen des Netzes, insbesondere dessen elektronische Bauteile.

Wird der Elektromagnet dadurch eingeschaltet, daß die Anschlüsse 116 und 118 mit einer Spannungsquelle verbunden werden, so schaltet der Timer 146 den FET 130 durch, so daß der maximal mögliche Einschaltstrom die Spule 124 durchfließt. Der weitere FET 140 ist dabei ständig durchgeschaltet. Durch Reduzierung des Spulenwiderstandes kann ein deutlich höherer Einschaltstrom gegenüber dem Nennstrom erreicht werden, der zu einer wesentlich günstigeren Einschaltdauer führt. Der Spulenstrom muß dabei nur so lange einen möglichst großen Wert besitzen, bis der Anker in die Spule 124 eingezogen worden ist, der Einschaltvorgang also beendet ist. Zu diesem Zeitpunkt geht die Steuerung des FET 130 vom Timer 146 über auf den Oszillator 148. Durch das variable Ein-Aus-Verhältnis (duty cycle) des Oszillators 148 kann das Verhältnis zwischen Einschalt- und Halteleistung nahezu beliebig variiert werden. Im Ausführungsbeispiel schaltet der Oszillator 148 beispielsweise den FET 130 im Mittel nur während 10% der Zeit durch und sperrt ihn während der restlichen Zeit. Während dieser restlichen Zeit besteht über die Freilaufdiode 144 ein Löschkreis für den Spulenstrom. Dadurch wird der Spulenstrom auf einen Wert abgesenkt, der so gewählt sein muß, daß der Anker noch gehalten wird. Der durch die Reduzierung des Spulenwiderstandes erreichte Übererregungseffekt im Einschaltmoment kann durch Wahl des Duty cyle des Oszillators so eingestellt werden, daß eine gegenüber der Magnetnennleistung reduzierte Halteleistung erreicht werden kann, also ein günstigerer Energieverbrauch und eine geringere Erwärmung.

Wird der Elektromagnet abgeschaltet durch Trennen der Anschlüsse 116, 118 von der Spannungsquelle, so sperrt die Netzerkennungsvorrichtung 142 den ansonsten durchgeschalteten weiteren FET 140. Wie im ersten Ausführungsbeispiel wird dann der Spulenstrom über den Varistor 126 gelöscht. Der Varistor 126 bewirkt gleichzeitig die Spannungsbegrenzung an der Spule 124 und so einen schnellen Stromabbau. Dies führt zu einer Schnellabschaltung des erfindungsgemäßen Elektromagneten. Die Netzerkennungsvorrichtung 142 und der weitere FET 140 könnten auch zur Abwandlung des ersten Ausführungsbeispiels oder des nachfolgend beschriebenen dritten Ausführungsbeispiels eingebaut werden.

Beim dritten Ausführungsbeispiel zum erfindungsgemäßen Elektromagneten ist ein Schutz für den als Schalter wirkenden FET vorgesehen. Die mit dem ersten Ausführungsbeispiel übereinstimmenden Teile sind mit um 200 höheren Bezugszeichen gekennzeichnet. Genau wie im ersten Ausführungsbeispiel ist ein Brückengleichrichter mit vier Dioden 211, 212, 213, 214 vorgesehen, der zwei Anschlüsse 216 und 218 aufweist, und an dessen Minuspol 222 die Source eines FET 230 angeschlossen ist. Das Gate des FET 230 ist in Abwandlung der erfindungsgemäßen Ansteuerung der Steuerelektrode an den aus dem Kondensator 232 und dem Widerstand 234 gebildeten Spannungsteiler angeschlossen und durch die Zenerdiode 236 geschützt. Mit dem Pluspol 220 des Gleichrichters 211, 212, 213, 214 ist das eine Ende der Spule 224 verbunden, während deren anderes Ende über den Potentialpunkt 228 mit der Drain des FET 230 verbunden ist. Ein Varistor 226 ist in diesem Ausführungsbeispiel einerseits mit dem Minuspol 222 und andererseits mit dem Potentialpunkt 228 verbunden, also parallel zum FET 230 angeschlossen. Der Varistor 226 schützt die Anordnung, insbesondere den FET 230, vor Spannungsspitzen, und zwar sowohl vor denen des Netzes als auch vor denen der Spule 224.

Die Funktionsweise des Ausführungsbeispiels stimmt zum Teil mit derjenigen des ersten Ausführungsbeispiels überein. Unterschiede ergeben sich bei den Schaltvorgängen. Beim Abschalten des Elektromagneten ist der Löschkreis des Spulenstromes, wie im ersten Ausführungsbeispiel, zunächst über den FET 230 und den Gleichrichter 211, 212, 213, 214 geschlossen. Sobald der FET 230 nicht mehr durchgeschaltet ist, nimmt der Varistor 226 dessen Stelle im Löschkreis ein, mit dem geschilderten Vorteil eines schnellen Löschens des Spulenstromes.

Das dritte Ausführungsbeispiel kann dadurch abgewandelt werden, daß statt an den Spannungsteiler das Gate, wie im zweiten Ausführungsbeispiel, an einen Timer und einen Oszillator angeschlossen und eine Freilaufdiode vorgesehen ist.

## Patentansprüche

1. Elektromagnet für ein Magnetventil mit
a) zwei Eingangsanschlüssen (16, 18; 116, 118; 216, 218) für den Anschluß der Schaltungsanordnung an eine Spannungsquelle,
b) einem Gleichrichter (11, 12, 13, 14; 111, 112, 113, 114), der mit den Eingangsanschlüssen (16, 18; 116, 118; 216, 218) verbunden ist und dessen Ausgangsanschlüsse einen Pluspol (20; 220) und einen Minuspol (22; 222) bilden,
c) einer Spule (24; 124; 224), die in einen Gleichspannungskreis des Gleichrichters (11, 12, 13, 14; 111, 112, 113, 114; 211, 212, 213, 214) geschaltet ist,
d) einem Varistor (26; 126; 226), der einen mit der Spule (24, 124, 224) gemeinsamen Potentialpunkt (28, 128, 228) aufweist,
e) und einem Schalter (30; 130; 230), der zwischen dem gemeinsamen Potentialpunkt (28; 128; 228) der Spule (24; 124; 224) und des Varistors (26; 126; 226) einerseits und einem der Gleichspannungsausgänge (20, 22; 120, 122; 220, 222) des Gleichrichters (11, 12, 13, 14; 111, 112, 113, 114; 211, 212, 213, 214) andererseits vorgesehen ist, derart, daß der Schalter (30; 130; 230) und die Spule (24; 124; 224) in Reihe geschaltet sind,
**dadurch gekennzeichnet,** daß an der Steuerelektrode des Schalters (30; 130; 230) parallel zueinander ein Timer (146) und ein Oszillator (148) angeschlossen sind.

2. Elektromagnet nach Anspruch 1, dadurch gekennzeichnet, daß der Varistor (26; 126) parallel zur Spule (24; 124) angeschlossen ist.

3. Elektromagnet nach Anspruch 1, dadurch gekennzeichnet, daß der Varistor (26; 126) parallel zum Schalter (230) angeschlossen ist.

4. Elektromagnet nach einem der Ansprüche 1 bis 3, dadurch gekennzeichnet, daß als Schalter ein Feldeffekt-Transistor (30; 130; 230) vorgesehen ist, dessen Source mit dem Minuspol (22; 122; 222) des Gleichrichters (11, 12, 13, 14; 111, 112, 113, 114; 211, 212, 213, 214), und dessen Drain mit dem gemeinsamen Potentialpunkt (28; 128; 228) der Spule (24; 124; 224) und des Varistors (26; 126; 226) verbunden ist.

5. Elektromagnet nach Anspruch 4, dadurch gekennzeichnet, daß das Gate des Feldeffekt-Transistors (30; 230) über einen Kondensator (32; 232) mit dem Minuspol (22; 222) und über einen Widerstand (34; 234) mit dem Pluspol (20; 220) des Gleichrichters (11, 12, 13, 14; 211, 212, 213, 214) verbunden ist.

6. Elektromagnet nach Anspruch 4 oder 5, dadurch gekennzeichnet, daß zwischen dem Pluspol (120) des Gleichrichters (111, 112, 113, 144) und einem weiteren gemeinsamen Potentialpunkt (138) der Spule (124) und des Varistors (126) ein weiterer Feldeffekt-Transistor (140) angeschlossen ist, dessen Gate mit einer Netzerkennungsvorrichtung (142) verbunden ist.

7. Magnetventil mit einem Elektromagneten nach einem der vorstehenden Ansprüche.

## Claims

1. Electromagnet for a solenoid valve, consisting of
a) two input connectors (16, 18; 116, 118; 216, 218) for connecting a circuit to a source of supply,
b) a rectifier (11, 12, 13, 14; 111, 112, 113, 114), connected to the input connectors (16, 18; 116, 118; 216, 218), whose output connectors represent a positive pole (20; 220) and a negative pole (22; 222),
c) a coil (24; 124; 224), connected into a DC circuit of the rectifier (11, 12, 13, 14; 111, 112, 113, 114; 211, 212, 213, 214),
d) a varistor (26; 126; 226), comprising a common potential point (28; 128; 228) with the coil (24, 124, 224), and
e) a switch (30; 130; 230), provided between the common potential point (28; 128; 228) of the coil (24; 124; 224) and the varistor (26; 126, 226) on one hand and one of the output connectors (20, 22; 120, 122; 220, 222) of the rectifier (11, 12, 13, 14; 111, 112, 113, 114; 211, 212, 213, 214) on the other, so that the switch (30; 130; 230) and the coil (24; 124; 224) are connected in series, characterised in that a timer (146) and an oscillator (148) are connected in parallel to the control electrode of the switch (30; 130; 230).

2. Electromagnet according to claim 1, characterised in that the varistor (26; 126;) is connected in parallel to the coil (24; 124).

3. Electromagnet according to claim 1, characterised in that the varistor (26; 126) is connected in parallel to the switch (230).

4. Electromagnet according to claim 1 to 3, characterised in that a field effect transistor (30; 130; 230) is provided as the switch, the source of which is connected with the negative pole (22; 122; 222) of the rectifier (11, 12, 13, 14; 111, 112, 113, 114; 211, 212, 213, 214) and whose drain is connected with the common potential point (28; 128; 228) of the coil (24; 124; 224) and the varistor (26; 126; 226).

5. Electromagnet according to claim 4, characterised in that the gate of the field effect transistor (30; 230) is connected via a capacitor (32; 232) to the negative pole (22, 222) and via a resistor (34; 234) to the positive pole (20; 220) of the rectifier (11, 12, 13, 14; 211, 212, 213, 214).

6. Electromagnet according to claim 4 or 5, characterised in that a further field effect transistor (140), the gate of which is connected to a power supply detection means (142), is connected between the positive pole (120) of the rectifier (111, 112, 113, 114) and a further common potential point (138) of the coil (124) and the varistor (126).

7. Solenoid valve comprising an electromagnet according to one of the above claims.

## Revendications

1. Électro-aimant pour électrovanne comprenant :
a) deux connexions d'entrée (16, 18 ; 116, 118 ; 216, 218) pour le branchement du circuit à une source de tension,
b) un redresseur (11, 12, 13, 14 ; 111, 112, 113, 114) qui est raccordé aux connexions d'entrée (16, 18 ; 116, 118 ; 216, 218) et dont les connexions de sortie forment un pôle plus (20 ; 220) et un pôle moins (22 ; 222),
c) une bobine (24 ; 124 ; 224), qui est montée dans un circuit de tension continue du redresseur (11, 12, 13, 14 ; 111, 112, 113, 114 ; 211, 212, 213, 214),
d) une varistance (26 ; 126 ; 226) qui comporte un point de potentiel (28 ; 128 ; 228) commun à la bobine (24 ; 124 ; 224),
e) et un interrupteur (30 ; 130 ; 230) qui est prévu entre le point de potentiel (28 ; 128 ; 228) commun de la bobine (24 ; 124 ; 224) et de la varistance (26 ; 126 ; 226), d'une part, et l'une des sorties du circuit de tension continue (20, 22 ; 120, 122 ; 220, 222) du redresseur (11, 12, 13, 14 ; 111, 112, 113, 114 ; 211, 212, 213, 214), d'autre part, de telle sorte que l'interrupteur (30 ; 130 ; 230) et la bobine (24 ; 124 ; 224) soient montés en série,
caractérisé en ce qu'une horloge à minuterie (146) et un oscillateur (148) sont connectés parallèlement l'un à l'autre à l'électrode de grille de l'interrupteur (30 ; 130 ; 230).

2. Électro-aimant selon la revendication 1, caractérisé en ce que la varistance (26 ; 126) est connectée parallèlement à la bobine (24 ; 124).

3. Électro-aimant selon la revendication 1, caractérisé en ce que la varistance (26 ; 126) est connectée parallèlement à l'interrupteur (230).

4. Électro-aimant selon l'une des revendications 1 à 3, caractérisé en ce qu'il est prévu comme interrupteur un transistor à effet de champ (30 ; 130 ; 230), dont la borne de source est reliée au pôle moins (22 ; 122 ; 222) du redresseur (11, 12, 13, 14 ; 111, 112, 113, 114 ; 211, 212, 213, 214), et dont la borne de drain est reliée au point de potentiel (28 ; 128 ; 228) commun de la bobine (24 ; 124 ; 224) et de la varistance (26 ; 126 ; 226).

5. Électro-aimant selon la revendication 4, caractérisé en ce que la grille du transistor à effet de champ (30 ; 230) est reliée par l'intermédiaire d'un condensateur (32 ; 232) au pôle moins (22 ; 222) du redresseur (11, 12, 13, 14 ; 211, 212, 213, 214) et par l'intermédiaire d'une résistance (34 ; 234) au pôle plus (20 ; 220) dudit redresseur.

6. Électro-aimant selon la revendication 4 ou 5, caractérisé en ce que, entre le pôle plus (120) du redresseur (111, 112, 113, 114) et un autre point de potentiel (138) commun de la bobine (124) et de la varistance (126), est connecté un transistor à effet de champ (140) supplémentaire, dont la grille est reliée à un dispositif de détection du réseau (142).

7. Électrovanne comprenant un électro-aimant selon l'une des revendications précédentes.
